# EUROPEAN PATENT APPLICATION

(11) **EP 1 650 729 A2**
(43) Date of publication of application: **26.04.2006**
(21) Application number: 05076952.0
(22) Date of filing: 25.08.2005
(51) Int. Cl.: G09F 9/00

(54) **Improved display and corresponding support, emissive lighting display modules and packaging for such display modules**

(30) Priority: 07.10.2004 US 616200 P
(71) Applicant: Barco, naamloze vennootschap., 8500 Kortrijk (BE)
(72) Inventor: Thielemanns, Robby, 9810 Nazareth (BE); De Keukeleire, Steven, 9800 Deinze (BE); Van Hille, Herbert, 85737 Ismaning (DE)
(74) Representative: Donné, Eddy

(57) **Abstract**

Display comprising a support holding a number of emissive lighting modules of single or multiple types whereby the emissive lighting modules are provided of a mechanical packaging of non-rectilinear geometry, optionally a triangular, a rectangular, a pentagonal, a hexagonal or an octagonal geometry; and whereby said support can have a two or three dimensional shape, and optionally can be a display tile assembly, a brick assembly, a pole assembly, a cabled assembly, a strip assembly, a grid assembly, a direct-mount display assembly, a mounting curtain assembly section and/or a curtain bar mechanism.

## Description

### BACKGROUND OF THE INVENTION

### 1. Field of the Invention

The present invention relates to packaging geometries for emissive lighting display modules and the corresponding support mechanisms that enable large-scale display applications. In particular, the present invention relates to an adaptable support framework and non-rectilinear display module packages that achieve non-orthogonal large-scale display geometries.

### 2. Discussion of the Related Art

Conventional incandescent lamps, fluorescent lamps, and neon tubes have long been used to illuminate many large-scale commercial and public signs. However, the market is now demanding cheaper and larger displays that have the flexibility to customize display sizes and colors, that have lighting, image and video capability, and that are easy to install, maintain and disassemble, especially for use in temporary venues; these are market specifications that are not possible with the older technologies. As a result, many displays now utilize emissive lighting modules, such as light emitting diodes (LEDs), or organic light emitting diodes (OLEDs), or other emissive display technologies. The emissive display modules are more advantageous than conventional lighting modules, because they consume less power, possess a much longer lifetime and have lower maintenance costs. However, the use of solid-state lighting is still relatively new in large-scale display applications; therefore, a need exists to provide a support framework for lighting modules for the purpose of creating integrated large-scale displays.

Emissive display technologies are currently being applied to modular large-scale display applications, such as outdoor or indoor stadium displays, large marketing advertisement displays, and mass-public informational displays. The configurations of these large-scale displays are often inflexible and have few display geometries and support frameworks and, therefore, result in standard rectilinear displays, such as billboards. Further, these displays are not always designed from the standpoint of easy assembly or maintenance and, at best, ready access of lighting elements is often considered late in the execution of the design. Thus, there exists a need to provide a support framework capable of being configured into a large variety of non-planar geometries. In addition, there is a need to provide lighting modules that have a variety of form factors and packaging geometries that can be fastened to a support framework in order to create a variety of large-scale displays with non-rectilinear peripheries.

An example of a configurable large-scale display is found in reference to U.S. patent No. 6,314,669, entitled "Sectional display system." The US patent No. 6,314,669 details a planar matrix of display units contained within a support framework that provides ready access to the internally located display modules and other components. This design allows for quick change-out of the modular display elements and other components. However, the US 6,314,669 patent fails to provide a means of creating large-scale non-planar displays, such as vaulted shapes, saddle shapes, or other curved displays that may envelop interior or exterior walls and ceilings.

The US patent No. 6,314,669 also requires that the lighting modules be uniformly populated, such that the spacing of display elements is constant and consistent along the length and breadth of the display system. This can be problematic for many display designs that require an irregular pitch for unique lighting effects or to minimize wind loads. Thus, a need exists to provide a support framework capable of being populated with lighting modules in a heterogeneous manner in order to achieve an irregular pitch.

### SUMMARY OF THE INVENTION

The present invention relates to packaging geometries for emissive display modules and the accompanying support mechanism for use in large-scale display applications. In particular, the present invention relates to an adaptable support framework and non-rectilinear display module packages that together form non-orthogonal large-scale displays.

It is an object of this invention to provide a support framework for lighting modules for the purpose of creating integrated large-scale displays.

It is another object of this invention to provide a support framework capable of being configured into a large variety of non-planar geometries.

It is yet another object of this invention to provide lighting modules with a variety of form factors and packaging geometries that can be fastened to a support framework to create a variety of large-scale displays that have non-rectilinear peripheries.

It is yet another object of this invention to provide a support framework capable of being populated with lighting modules in a heterogeneous manner in order to achieve an irregular pitch.

To this aim, the present invention concerns a display comprising a support holding a number of emissive display modules of single or multiple types whereby the emissive display modules are provided of a mechanical packaging of non-rectilinear geometry, optionally a triangular, a rectangular, a pentagonal, a hexagonal or an octagonal geometry; and whereby said support can have a two or three dimensional shape, and optionally can be a display tile assembly, a brick assembly, a pole assembly, a cabled assembly, a strip assembly, a grid assembly, a direct-mount display assembly, a mounting curtain assembly section and/or a curtain bar mechanism.

The present invention is also about such a packaging and about emissive display modules provided of a packaging which can be used in a display as described above and where the packaging has a non-rectilinear geometry, optionally a triangular, a rectangular, a pentagonal, a hexagonal or an octagonal geometry.

The present invention also handles about a support which can be used in a display according to the invention, where such support can be a display tile assembly, a brick assembly, a pole assembly, a cabled assembly, a strip assembly, a grid assembly, a direct-mount display assembly, a mounting curtain assembly section and/or a curtain bar mechanism.

According to a preferred embodiment of the display, the emissive lighting modules held by the support can be distributed in a heterogeneous manner in order to achieve an irregular pitch.

### BRIEF DESCRIPTION OF THE DRAWINGS

In order to better show the characteristics of the invention, some preferred embodiments of a mechanical packaging and supports are shown which can be used in a display according to the invention, without being limitative in any way, with reference to the attached drawings, where:
figures 1A through 1E illustrate perspective views of a variety of display module types in accordance with the invention;
figures 2A and 2B illustrate respectively a plan view and a perspective view of a display tile assembly for use as an illuminated floor tile in accordance with the invention;
figure 3 illustrates a perspective view of a viewable side of a brick assembly for use in a larger display in accordance with the invention;
figure 4A and 4B illustrates perspective views of a pole display assembly in accordance with the invention;
figure 5 illustrates a perspective view of a cabled display assembly in accordance with the invention;
figure 6A and 6B illustrate perspective views of a strip assembly in accordance with the invention;
figure 7A and 7B illustrate perspective views of a fastening mechanism that joins multiple strip assemblies in accordance with the invention;
figure 8A through 8D are perspective views of a grid assembly for mounting a plurality of display modules in accordance with the invention;
figure 9A illustrates a direct-mount display assembly in accordance with the invention;
figure 9B illustrates a direct-mount display enclosure in accordance with the invention;
figure 10A illustrates a mounting curtain assembly section in accordance with the invention;
figure 10B illustrates a curtain assembly display mount in accordance with the invention;
figure 11A illustrates a curtain bar mechanism in accordance with the invention;
figure 11B illustrates a data and power cable which is contained within the curtain bar mechanism in accordance with the invention.

### DESCRIPTION OF SOME PREFERRED EMBODIMENTS

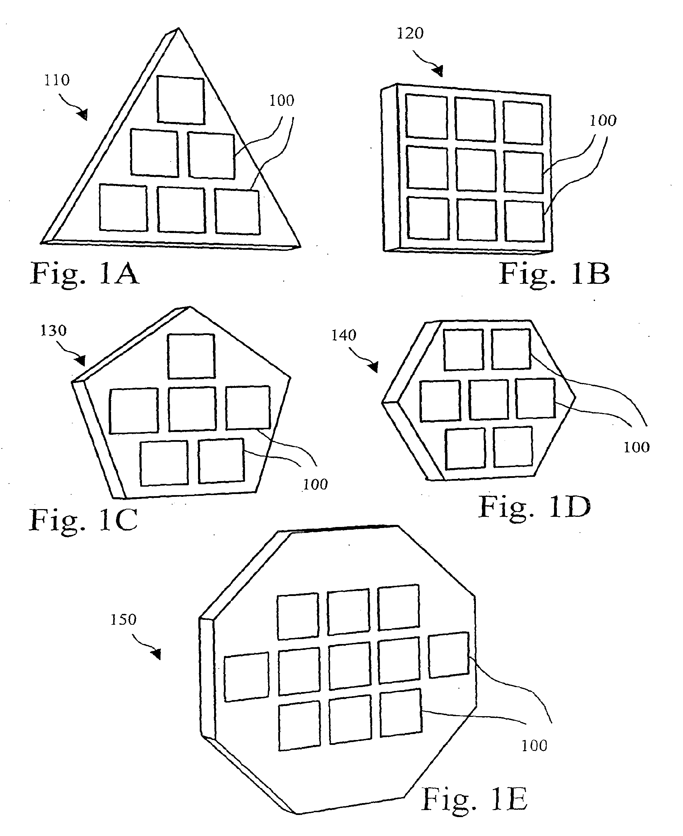

Figures 1A through 1E illustrate the perspective views of a variety of display module types in accordance with the invention. Display modules are the smallest user-configurable lighting elements of a large-scale display and contain all the electronic circuitry necessary to power and drive an array of emissive lighting elements 100. Display modules may be of a variety of packaging outlines. A triangular display module 110 is a triangle-shaped lighting module that contains an array of, for example, six emissive lighting elements 100. A rectangular display module 120 is a rectangle-shaped lighting module that contains an array of, for example nine emissive lighting elements 100 in a 3 x 3 array. A pentagonal display module 130 is a pentagon-shaped lighting module that contains an array of, for example six emissive lighting elements 100.

A hexagonal display module 140 is a hexagon-shaped lighting module that contains an array of, for example seven emissive lighting elements 100. An octagonal display module 150 is an octagon-shaped lighting module that contains an array of, for example eleven emissive lighting elements 100.

In operation, a plurality of display modules are interconnected within a support framework (not shown) to form a modular large-scale display (not shown) that is operated by means of a display control module (not shown). Figures 1A through 1E illustrate a number of exemplary arrays of emissive lighting elements 100; however, actual array sizes and shapes are not limited to those provided in these array examples.

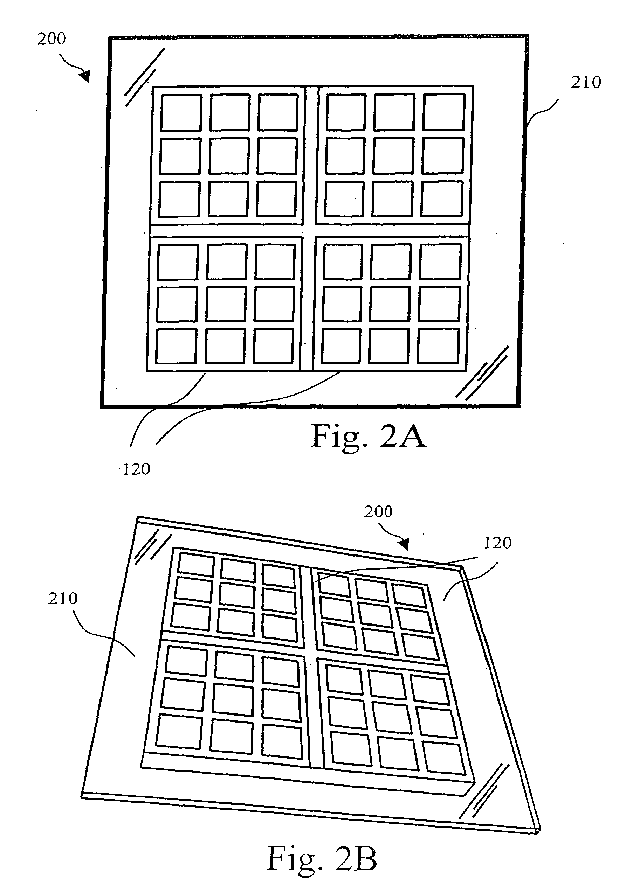

Figures 2A and 2B illustrate a plan view and a perspective view, respectively, of a display tile assembly 200. Display tile assembly 200 is a planar assembly of, for example, four rectangular display modules 120, and is suitable for use as an illuminated floor tile. Display tile assembly 200 operates within a set of tile assemblies to form a large-area, tiled display; for example, a display that covers an entire floor. A single display tile assembly 200 includes a number of rectangular display modules 120, for example four and a protective glass cover 210. The display modules 120 within a display tile assembly 200 can be placed in contact with each other or they can be placed at a certain fixed or arbitrary distance of each other, depending on the application.

In operation, a plurality of tile assemblies 200 are interconnected to form an overall large-scale floor display (not shown) that is operated by means of a display control module (not shown).

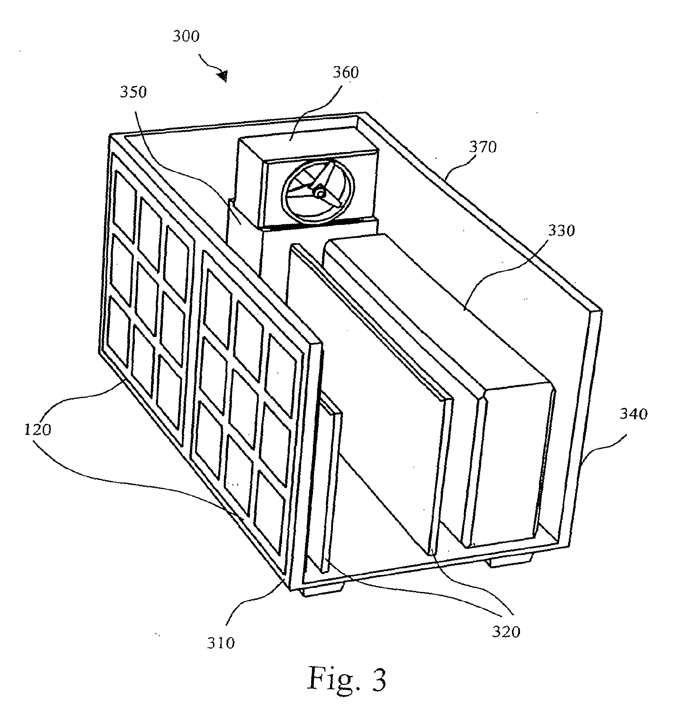

Figure 3 is a perspective view of a viewable side of a brick assembly 300 in accordance with the invention. Brick assembly 300 is suitable for use as an autonomous display; or, alternatively, may operate within a set of brick assemblies 300 to form a larger display (not shown). Brick assembly 300 includes a number of rectangular display modules 120, for example two, a faceplate 310, drive circuit printed circuit boards (PCBs) 320, a heat sink 330, a service (Light-Emitting Diode) LED 340, a backup battery 350, a cooling fan 360 and a display housing 370.

Faceplate 310 is a protective glass cover that encases rectangular display modules 120. Drive circuit PCBs 320 contains the electronic circuits that switch the individual emissive lighting elements 100 on and off and control the intensity of the display. Heat sink 330 and cooling fan 360 are the thermal management components that regulate the temperature within brick assembly 300. Service LED 340 is readable by user maintenance personnel and indicates a malfunction within brick assembly 300. Backup battery 350 provides auxiliary power, in the event of a power outage, to allow brick assembly 300 to store display configuration settings before power-down.

In operation, drive circuit PCBs 320 receives control signals from controller module (not shown) by means of data cables (not shown) and uses signals to activate and modulate the illumination of rectangular display modules 120 that create a portion of an overall display. A large-scale display is constructed from an array of brick assemblies 300, for example a large-scale wall display.

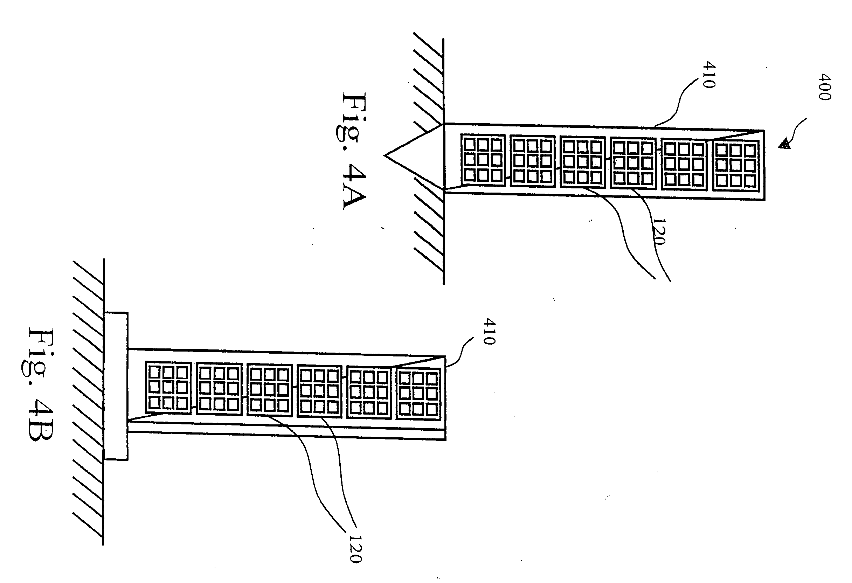

Figures 4A and 4B are perspective views of a pole assembly 400 in accordance with the invention. Pole assembly 400 includes a number of display modules, for example, rectangular display modules 120 stacked in the vertical dimension on a single vertical surface. Pole assembly 400 also includes a pole support member 410, cabling used to carry data and power to rectangular display modules 120 (not shown), and a mechanical means of fixing the display tiles onto the pole (not shown).

Pole assembly 400 can have rectangular display modules 120 mounted on more than one vertical surface of a pole. Additionally, a single vertical surface of a pole may contain more than one vertical stack of rectangular display modules 120 (not shown). The distances between the individual rectangular display modules 120 mounted on pole assembly 400 is variable. Pole assembly 400 is installed on site, for example, by securing one end into the ground. Other means of anchoring pole assembly 400 are also possible, as shown in figure 4B.

In operation, pole assembly 400 receives control signals from controller module (not shown) by means of data cables (not shown) that determine the illumination level of each emissive lighting elements of the display. Pole assembly 400 then illuminates to produce a pole assembly 400 viewable image.

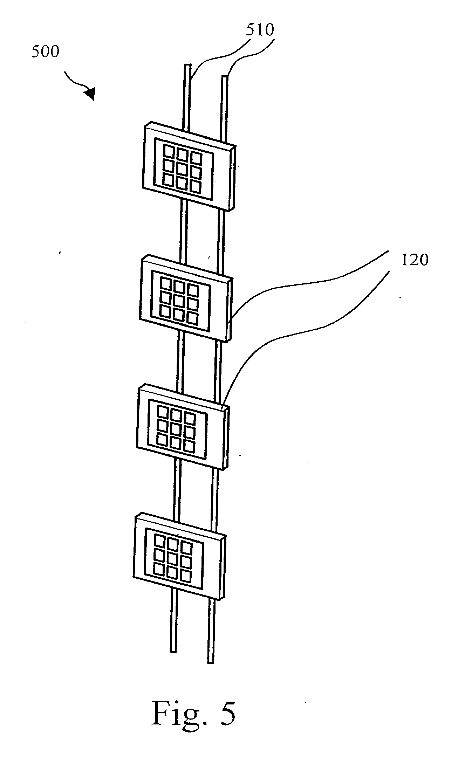

Figure 5 is a perspective view of a cabled assembly 500 in accordance with the invention. Cabled assembly 500 includes a number of display modules, for example four rectangular display modules 120 assembled in a linear fashion on mounting cables 510. In addition, electrical cabling (not shown) is used to carry data and power to rectangular display modules 120, and means of mounting rectangular display modules 120 onto the pole (not shown). In operation, a number of cabled assemblies 500 operating in parallel produce an overall large-scale display (not shown) that is operated by means of a display control module (not shown).

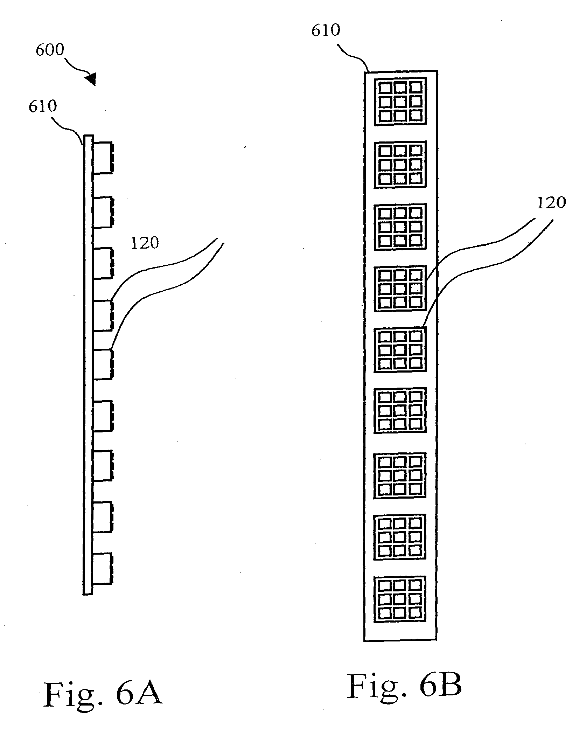

Figures 6A and 6B illustrate a side view and a front view, respectively, of a strip assembly 600 in accordance with the invention. Strip assembly 600 includes a number of display modules, for example, nine rectangular display modules 120 fastened in a linear fashion onto a strip mounting subassembly 610. The use of other display module geometries, for example triangular display module 110, pentagonal display module 130, hexagonal display module 140, or octagonal display module 150, is possible. Strip mounting subassembly 610 is a strip of flexible material, for example, a polymer, that is capable of securely holding rectangular display modules 120, while providing flexibility and thereby allowing strip assembly 600 to be bent into a variety of forms, such that a number of non-orthogonal, three-dimensional surfaces can be achieved, e.g. spherical-, conical-, or barrel-shaped surfaces. Strip mounting subassembly 610 also provides cabling for interconnecting the data and power connections to rectangular display modules 120 adjacent to each other on the strips (not shown). The flexibility of strip assembly 600 also allows a compact packaging of long strips (not shown). Strip assembly 600 may have a variety of lengths and widths. Other strip shapes and designs, including curved shapes are also possible.

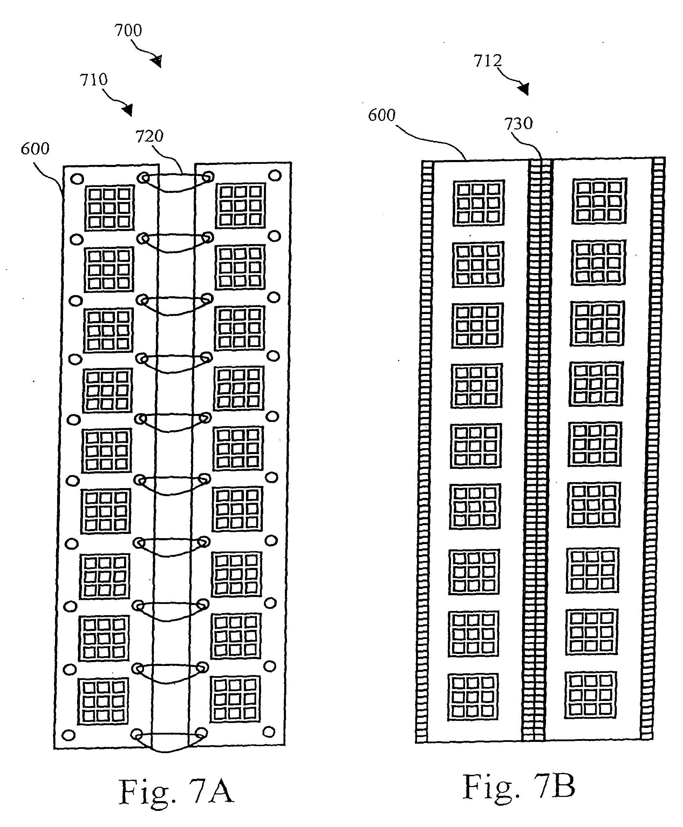

Figure 7A and 7B illustrate front views of fastening mechanisms 700 that join multiple strip assemblies 600 along their lateral dimension. Figure 7A depicts a strip fastening mechanism 710, which joins a plurality of strip assemblies 600 together by a cord 720, which is, for example, a polymer rope. Alternatively, figure 7B depicts strip fastening mechanism 712. Strip fastening mechanism 712 illustrates a number of strip assemblies 600 that are joined together using zippers 730 or similar mechanisms (not shown). In operation an overall large-scale display (not shown) is produced by operating a number of strip assemblies 600 together in parallel.

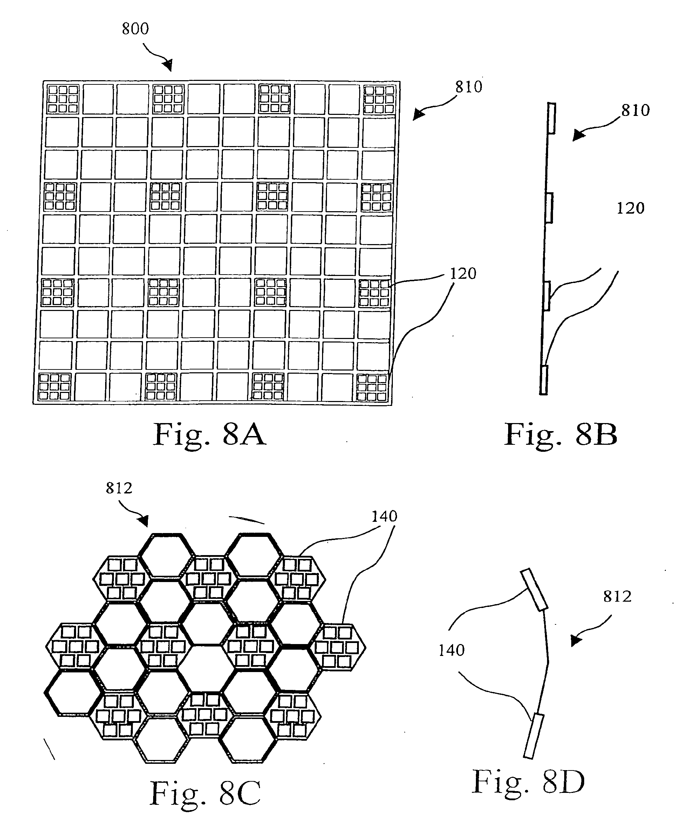

Figures 8A through 8D depict grid assembly 800 in accordance with the invention. Grid assembly 800 is a structural framework used for mounting a plurality of display modules, and is formed of, for example, a lattice of extruded aluminium tubing. Grid assembly 800 is designed to be mounted on a large structural surface, such as a building wall (not shown). Grid assembly 800 is capable of taking on a variety of three-dimensional geometries in order to create both planar and complex non-planar surfaces. Figures 8A and 8B depict a rectangular grid assembly 810. Rectangular grid assembly 810 is a planar and rectilinear framework designed to carry rectangular display modules 120 for a flat display. Other, non-planar, configurations for rectangular grid assembly 810 are possible. Figures 8C and 8D depict a hexagonal grid assembly 812. Hexagonal grid assembly 812 is a honeycomb-like structure designed to hold hexagonal display modules 140. Hexagonal grid assemblies 812, as shown in figures 8C and 8D, implement a non-planar display with an irregular outline. Overall, hexagonal grid assembly 812 is capable of implementing large non-planar displays, such as barrel vaults, domes, saddle shapes or non-uniform, three-dimensional shapes (not shown).

In operation, grid assembly 800 receives control signals from controller modules (not shown) by means of data cables (not shown) that determine the illumination level of each emissive lighting element of the display. Grid assembly 800 then illuminates to produce a large-scale display.

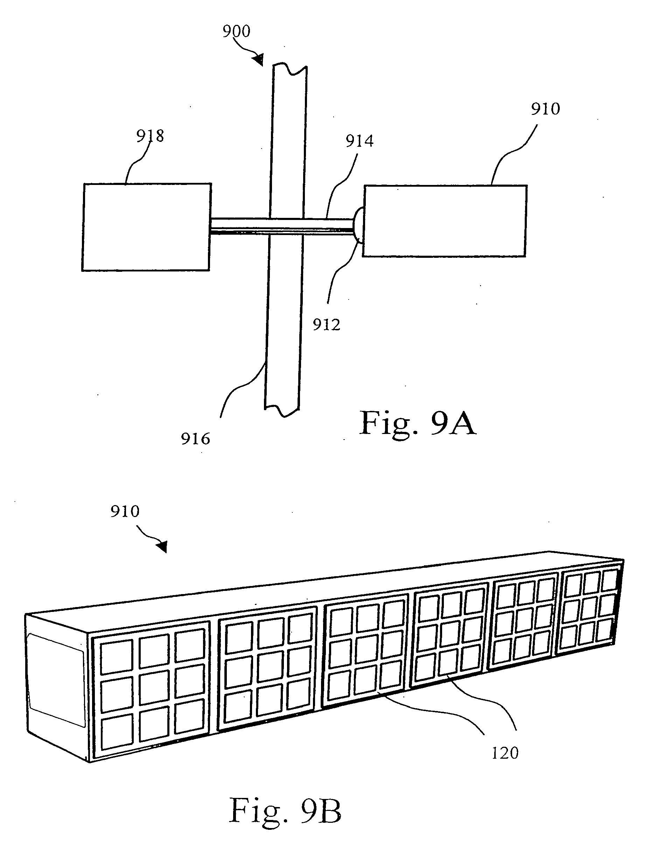

Figure 9A illustrates a direct-mount display assembly 900 in accordance with the invention. Direct-mount display assembly 900 is formed of a direct-mount display enclosure 910, a hinge mechanism 912, a mounting attachment 914, a building wall 916, and a controller 918. Figure 9B depicts a perspective view of direct-mount display assembly 910 and includes a direct-mount display enclosure 910, which contains a plurality of display modules, for example six rectangular display modules 120.

Direct-mount display assembly 900 is formed of direct-mount display enclosure 910 mounted through hinge mechanism 912, which allows easy adjustment of the display angle for, for example ready maintenance or removal. Direct-mount display assembly 900 is anchored to building wall 916 through mounting attachment 914. Controller 918 can be mounted inside building wall 916 and contains the display control functionality and power supply required for the operation of display assembly 900.

In operation, a plurality of direct-mount display assemblies 900 receive control signals from controller 918 by means of data cables (not shown) that determine the illumination level of each emissive lighting element of the display. Direct-mount display assembly 900 then illuminates to produce a large-scale display.

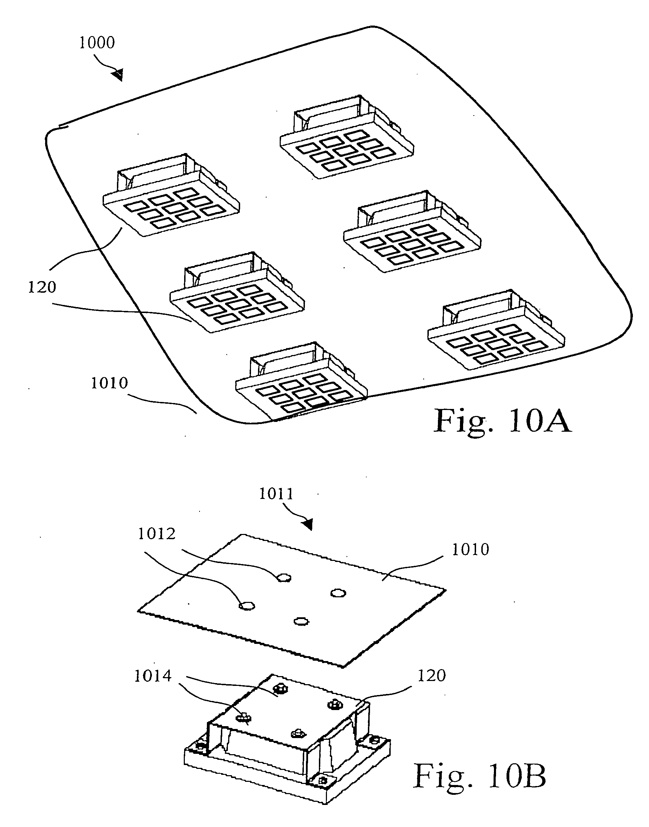

Figure 10A illustrates a mounting curtain assembly section 1000 in accordance with the invention. Mounting curtain assembly section 1000 is formed of a curtain 1010 and a number of display modules, for example, six rectangular display modules 120. Mounting curtain assembly section 1000 is a portion of an overall large-scale display (not shown) that may contain many numbers of mounting curtain assembly sections 1000.

Figure 10B illustrates a curtain assembly display mount 1011 in accordance with the invention. Curtain assembly display mount 1011 possesses a plurality of push-button receptacles 1012, for example, four, on curtain 1010, onto which rectangular display modules 120 mount by means of "snap-in-place" push buttons 1014. Alternatively, rectangular display modules 120 can be mounted to curtain 1010 by means of a threaded stud (not shown), passing through a "buttonhole" (not shown) on curtain 1010 and secured in place by means of a nut (not shown). Numerous additional means of mounting rectangular display modules 120 are also possible, such as a sewn pocket in curtain 1010 (not shown). The use of other display module geometries, for example triangular display module 110, pentagonal display module 130, hexagonal display module 140, or octagonal display module 150, is possible by the use of mounting curtain assembly section 1000. Additional effects are possible, for example, the fabric of curtain 1010 may be conventionally printed upon in order to produce a banner or billboard that uses rectangular display modules 120 for lighting or image enhancement.

The shape and dimensions of curtain 1010 can vary. In addition, any number of display modules, for example rectangular display modules 120, can be attached to the curtain, by the use of, for example, push buttons 1014. The display pitch can be modified by selectively populating curtain 1010 with rectangular display modules 120 at various distances. During installation display modules are fed through the curtain 1010 and the wires are concealed behind them. Alternatively, curtain 1010 can be of a "sandwiched" construction, for example, a second layer can be added with stitched channels where the cables (not shown) can be fed through to provide electrical interconnection for control signals and power.

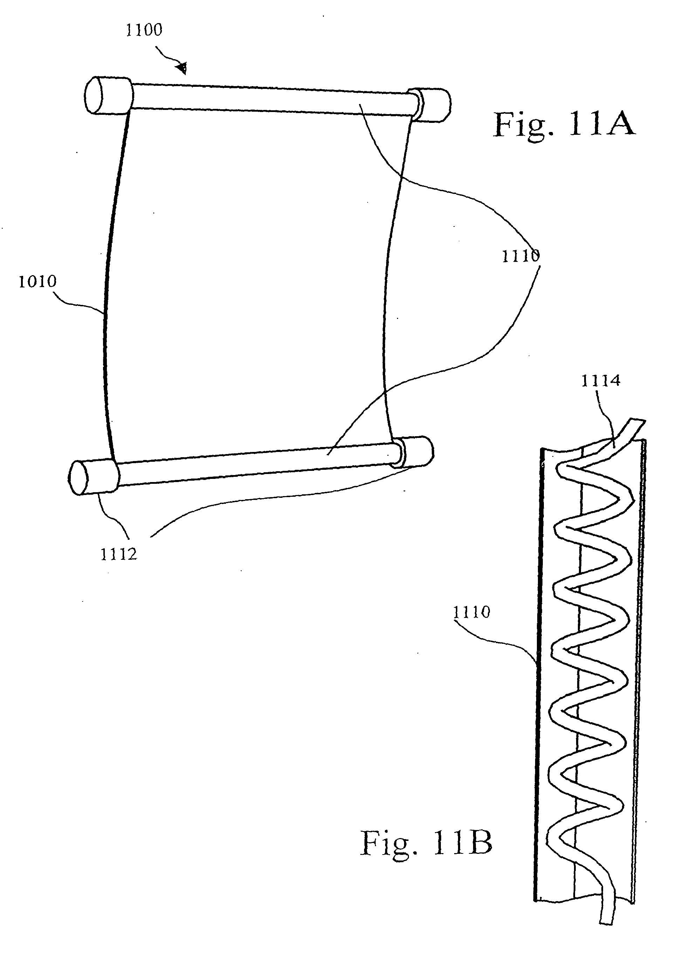

Figure 11A illustrates a curtain bar mechanism 1100 in accordance with the invention. Curtain bar mechanism 1100 consists of curtain 1010, which is mounted between curtain bars 1110. Curtain bars 1110 are fixed by means of attachments 1112 to a wall, ceiling or similar fixed surface (not shown).

Figure 11B depicts data and power cable 1114, which is contained within curtain bar mechanism 1100. Data and power cable 1114 provides a connection to controller boxes (not shown) that are unobtrusively installed within walls or at attachments 1112, for example. Curtain bars 1110 are spaced at intervals that do not affect pixel pitch.

In operation, a plurality of mounting curtain assembly sections 1000 receive control signals from controller assemblies by means of data cables (not shown) that determine the illumination level of each emissive lighting element of the display. Mounting curtain assembly sections 1000 then illuminate to produce a large-scale display.

The present invention is a number of packaging geometries for emissive lighting display modules and the corresponding support mechanisms. Therefore, support frameworks are provided for a variety of lighting modules for the purpose of creating integrated large-scale displays. The packaging geometries of the present invention include: a triangular display module 110, a rectangular display module 120, a pentagonal display module 130, a hexagonal display module 140, and an octagonal display module 150. Thus, lighting modules with a variety of form factors and packaging geometries are provided that can be fastened to a support framework to create a variety of large-scale planar or non-planar displays that have non-rectilinear peripheries. The support mechanisms of the present invention include: a display tile assembly 200, a brick assembly 300, a pole assembly 400, a cabled assembly 500, a strip assembly 600, fastening mechanisms 700, a grid assembly 800, a direct-mount display assembly 900, a mounting curtain assembly sections 1000, and a curtain bar mechanism 1100. Therefore, numerous support frameworks capable of being configured into a large variety of planar or non-planar geometries are provided, whereby the support mechanisms hold a large number of display modules of single or multiple types to create a large-scale display, and support framework capable of being populated with lighting modules in a heterogeneous manner to achieve an irregular pitch is demonstrated.

The invention is by no means restricted to the above described embodiment, represented in the accompanying drawings; on the contrary, such a mechanical packaging and support which can be used in a display according to the invention, can be made in all sorts of variants while still remaining within the scope of the invention.

## Claims

1. Display comprising a support holding a number of emissive lighting modules of single or multiple types whereby the emissive lighting modules are provided of a mechanical packaging of non-rectilinear geometry, optionally a triangular, a rectangular, a pentagonal, a hexagonal or an octagonal geometry; and whereby said support can have a two or three dimensional shape, and optionally can be a display tile assembly, a brick assembly, a pole assembly, a cabled assembly, a strip assembly, a grid assembly, a direct-mount display assembly, a mounting curtain assembly section and/or a curtain bar mechanism.

2. Display according to claim 1, whereby the display is a large scale display.

3. Display according to claim 1, whereby the mechanical packaging and the support are such that they allow to build a display with a non-rectilinear periphery.

4. Display according to claim 1, whereby the mechanical packaging and the support are such that they allow to build a non-planar geometry of the display, optionally a vaulted shape, a saddle shape or other curved shapes.

5. Display according to claim 1, whereby the emissive lighting modules held by the support are distributed in a heterogeneous manner in order to achieve an irregular pitch.

6. Mechanical packaging for emissive lighting modules for use in a display according to claim 1, whereby the mechanical packaging has a non-rectilinear geometry, optionally a triangular, a rectangular, a pentagonal, a hexagonal or an octagonal geometry.

7. Emissive lighting display module for use in a display according to claim 1, whereby the emissive lighting module is provided of a mechanical packaging with non-rectilinear geometry, optionally a triangular, a rectangular, a pentagonal, a hexagonal or an octagonal geometry.

8. Support for use in a display according to claim 1, whereby the support can be a display tile assembly, a brick assembly, a pole assembly, a cabled assembly, a strip assembly, a grid assembly, a direct-mount display assembly, a mounting curtain assembly section and/or a curtain bar mechanism.
